# EUROPEAN PATENT APPLICATION

(11) **EP 4 071 710 A1**
(43) Date of publication of application: **12.10.2022**
(21) Application number: 20915371.7
(22) Date of filing: 05.11.2020
(51) Int. Cl.: G06T 7/00, H04N 7/18

(54) **OBJECT DETECTING DEVICE, OBJECT DETECTING METHOD, AND OBJECT DETECTING PROGRAM**

(30) Priority: 22.01.2020 JP 2020008425
(71) Applicant: MITSUBISHI ELECTRIC CORPORATION, Chiyoda-ku Tokyo 100-8310 (JP)
(72) Inventor: ISANO, Shoto, Tokyo 100-8310 (JP); SEMITSU, Takayuki, Tokyo 100-8310 (JP); NAKAO, Takamasa, Tokyo 108-0023 (JP); ABE, Hirokazu, Tokyo 108-0023 (JP); TOKUDA, Yuuki, Tokyo 108-0023 (JP); YAMATARI, Mitsuyoshi, Tokyo 108-0023 (JP)
(74) Representative: Pfenning, Meinig & Partner mbB
(86) International application number: PCT/JP2020/041432
(87) International publication number: WO 2021/149327

(57) **Abstract**

A region specifying unit (28) takes, as test data, a plurality of pieces of image data obtained by photographing a photographing region with a photographing device, and specifies an enlarging region in accordance with an appearance number indicating how many objects smaller than a standard size appear in the test data. A data extraction unit (23) extracts, out of the image data obtained by photographing the photographing region, image data of the enlarging region, as partial data. A size modification unit (24) size-modifies the partial data to a request size requested by an object detection model being a model that detects an object from image data. An object detection unit (25) inputs the size-modified partial data to the object detection model, and detects a target object from the partial data.

## Description

### Technical Field

The present disclosure relates to a technique of detecting a target object from image data with using an object detection model.

### Background Art

Conventionally, image data obtained by a photographing device is inputted to an object detection model generated using deep learning or the like, thereby detecting a target object included in the image data (see Patent Literature 1). With the object detection model, sometimes the object is detected after the image data is reduced to a predetermined size.

### Citation List

### Patent Literature

Patent Literature 1: JP 2019-003396 A

### Summary of Invention

### Technical Problem

For example, an object that appears deep in the background of image data becomes excessively small when the image data is reduced, and accordingly it is difficult to detect the object with using an object detection model.

An objective of the present disclosure is to make it possible to detect even an object that appears small, with using an object detection model.

### Solution to Problem

An object detection device according to the present disclosure includes:
a region specifying unit to take, as test data, a plurality of pieces of image data obtained by photographing a photographing region with a photographing device, and to specify an enlarging region in accordance with an appearance number about each region constituting the photographing region, the appearance number indicating how many objects smaller than a standard size appear in the test data;
a data extraction unit to extract, out of the image data obtained by photographing the photographing region, image data of the enlarging region specified by the region specifying unit, as partial data;
a size modification unit to size-modify the partial data extracted by the data extraction unit to a request size requested by an object detection model being a model that detects an object from image data; and
an object detection unit to input the partial data size-modified by the size modification unit to the object detection model, and to detect a target object from the partial data.

The region specifying unit specifies a region where the appearance number is larger than a threshold value, as the enlarging region, or specifies a region regarding which the appearance number in the other region is smaller than the threshold value, as the enlarging region.

The region specifying unit specifies a region where the appearance number is the largest, as the enlarging region, or specifies a region regarding which the appearance number in the other region is the smallest, as the enlarging region.

The region specifying unit includes:
an appearance number calculation unit to take each of a plurality of regions in the photographing region as a calculation region, and to calculate an appearance number about each calculation region, the appearance number indicating how many objects smaller the standard size appear;
an elite extraction unit to extract some calculation regions where the appearance numbers calculated by the appearance number calculation unit are large, each as an elite region;
a region modification unit to generate a modified region modified from the elite region extracted by the elite extraction unit, by either mutation or crossover;
a region setting unit to set each of the elite region and the modified region generated by the region modification unit, as a new calculation region; and
a specifying unit to specify, about calculation regions being set by the region setting unit in a standard-number time, a calculation region where the calculated appearance number is larger than the threshold value, as the enlarging region.

The object detection device further includes
a data generation unit to take an object included in test data detected by a sensor, as a target object, and to set a figure with a size corresponding to a distance from the photographing device to the target object, at a position of the target object, thereby generating annotation data expressing a position and a size of the object included in the test data,
wherein the region specifying unit calculates the appearance number indicating how many objects smaller than the standard size appear, on a basis of the annotation data generated by the data generation unit.

The object detection device further includes
a data generation unit to set a figure enclosing a portion in which there is a difference between background data and each of a plurality of pieces of image data which are test data, the background data being obtained by photographing the photographing region while no detection target object exists in the photographing region, thereby generating annotation data expressing a position and a size of the object included in the test data,
wherein the region specifying unit calculates the appearance number indicating how many objects smaller than the standard size appear, on a basis of the annotation data generated by the data generation unit.

The data extraction unit extracts image data of a region including a detection target region, as target data from image data obtained by photographing the photographing region,
the size modification unit size-modifies each of the target data and the partial data to a request size, and
the object detection unit inputs each of the target data and the partial data which are size-modified, to the object detection model, and detects a target object from each of the target data and the partial data.

The region specifying unit specifies each of a plurality of regions where the appearance number is smaller than a threshold value, as an enlarging region,
the data extraction unit extracts image data of each enlarging region as partial data,
the size modification unit size-modifies partial data about said each enlarging region, from image data to the request size, and
the object detection unit inputs the size-modified partial data about said each enlarging region to the object detection model, and detects a target object from the partial data about said each size-modified enlarging region.

The region specifying unit specifies a plurality of enlarging regions by specifying a region where the appearance number is the largest, as an enlarging region, while gradually raising the standard size, the appearance number indicating how many objects smaller than the standard size appear.

An object detection method according to the present disclosure includes:
by a region specifying unit, taking, as test data, a plurality of pieces of image data obtained by photographing a photographing region with a photographing device, and specifying an enlarging region in accordance with an appearance number about each region constituting the photographing region, the appearance number indicating how many objects smaller than a standard size appear in the test data;
by a data extraction unit, extracting, out of the image data obtained by photographing the photographing region, image data of the enlarging region, as partial data;
by a size modification unit, size-modifying the partial data to a request size requested by an object detection model being a model that detects an object from image data; and
by an object detection unit, inputting the size-modified partial data to the object detection model, and detecting a target object from the partial data.

An object detection program according to the present disclosure causes a computer to function as an object detection device that performs:
a region specifying process of taking, as test data, a plurality of pieces of image data obtained by photographing a photographing region with a photographing device, and specifying an enlarging region in accordance with an appearance number about each region constituting the photographing region, the appearance number indicating how many objects smaller than a standard size appear in the test data;
a data extraction process of extracting, out of the image data obtained by photographing the photographing region, image data of the enlarging region specified by the region specifying unit, as partial data;
a size modification process of size-modifying the partial data extracted by the data extraction process to a request size requested by an object detection model being a model that detects an object from image data; and
an object detection process of inputting the partial data size-modified by the size modification process to the object detection model, and detecting a target object from the partial data.

### Advantageous Effects of Invention

In the present disclosure, an enlarging region is specified in accordance with an appearance number indicating how many objects smaller than a standard size appear in test data. As a result, even a small object can be detected with using the object detection model.

### Brief Description of Drawings

Fig. 1 is a configuration diagram of an object detection device 10 according to Embodiment 1.
Fig. 2 is a flowchart illustrating operations of the object detection device 10 according to Embodiment 1.
Fig. 3 is a diagram illustrating a detection target region 33 and an enlarging region 34 which are according to Embodiment 1.
Fig. 4 is a diagram illustrating target data 35 and partial data 36 which are according to Embodiment 1.
Fig. 5 includes explanatory diagrams of size modification processing according to Embodiment 1.
Fig. 6 is a configuration diagram of an object detection device 10 according to Modification 1.
Fig. 7 is a diagram illustrating enlarging regions 34 according to Embodiment 2.
Fig. 8 is a configuration diagram of an object detection device 10 according to Embodiment 3.
Fig. 9 is a flowchart illustrating operations of the object detection device 10 according to Embodiment 3.

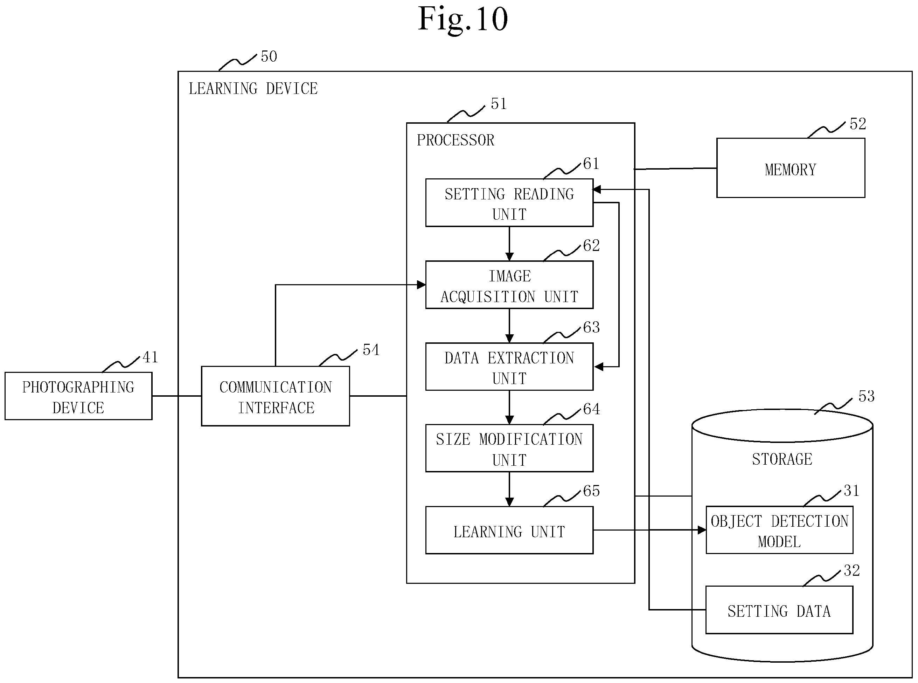

Fig. 10 is a configuration diagram of a learning device 50 according to Modification 5.
Fig. 11 is a configuration diagram of an object detection device 10 according to Embodiment 4.
Fig. 12 is a flowchart illustrating operations of the object detection device 10 according to Embodiment 4.
Fig. 13 includes explanatory diagrams of an appearance number calculation process according to Embodiment 4.
Fig. 14 is an explanatory diagram of the appearance number calculation process according to Embodiment 4.
Fig. 15 is an explanatory diagram of an elite extraction process according to Embodiment 4.
Fig. 16 includes explanatory diagrams of a region modification process according to Embodiment 4.
Fig. 17 includes explanatory diagrams of a specifying process according to Embodiment 4.
Fig. 18 is a flowchart illustrating operations of an object detection device 10 according to Modification 7.
Fig. 19 is a configuration diagram of an object detection device 10 according to Embodiment 5.
Fig. 20 includes explanatory diagrams of a method that is based on a distance according to Embodiment 5.
Fig. 21 is an explanatory diagram of a method based on a background difference according to Embodiment 5.

### Description of Embodiments

### Embodiment 1.

### ^{∗∗∗} Description of Configuration ^{∗∗∗}

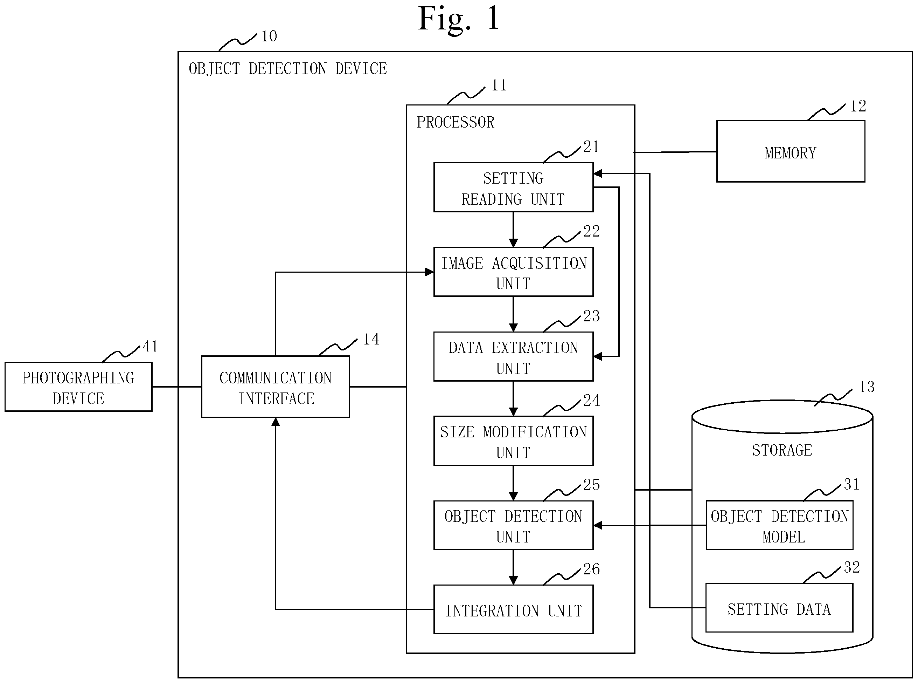

A configuration of an object detection device 10 according to Embodiment 1 will be described with referring to Fig. 1.

The object detection device 10 is a computer.

The object detection device 10 is provided with hardware devices which are a processor 11, a memory 12, a storage 13, and a communication interface 14. The processor 11 is connected to the other hardware devices via a signal line and controls the other hardware devices.

The processor 11 is an Integrated Circuit (IC) which performs processing. Specific examples of the processor 11 include a Central Processing Unit (CPU), a Digital Signal Processor (DSP), and a Graphics Processing Unit (GPU).

The memory 12 is a storage device that stores data temporarily. Specific examples of the memory 12 include a Static Random-Access Memory (SRAM) and a Dynamic Random-Access Memory (DRAM).

The storage 13 is a storage device that keeps data. Specific examples of the storage 13 include a Hard Disk Drive (HDD). Alternatively, the storage 13 may be a portable recording medium such as a Secure Digital (SD; registered trademark), a CompactFlash (registered trademark; CF), a Nand flash, a flexible disk, an optical disk, a compact disk, a Blu-ray (registered trademark) Disc, and a Digital Versatile Disk (DVD).

The communication interface 14 is an interface to communicate with an external device. Specific examples of the communication interface 14 include an Ethernet (registered trademark) port, a Universal Serial Bus (USB) port, and a High-Definition Multimedia Interface (HDMI; registered trademark) port.

The object detection device 10 is connected to a photographing device 41 such as a monitor camera via the communication interface 14.

The object detection device 10 is provided with a setting reading unit 21, an image acquisition unit 22, a data extraction unit 23, a size modification unit 24, an object detection unit 25, and an integration unit 26, as function constituent elements. Functions of the function constituent elements of the object detection device 10 are implemented by software.

A program that implements the functions of the function constituent elements of the object detection device 10 is stored in the storage 13. This program is read into the memory 12 by the processor 11 and run by the processor 11. Hence, the functions of the function constituent elements of the object detection device 10 are implemented.

An object detection model 31 and setting data 32 are stored in the storage 13.

In Fig. 1, the processor 11 is illustrated only one. However, a plurality of processors 11 may be employed. The plurality of processor 11 may cooperate with each other to run the program that implements the functions.

### ^{∗∗∗} Description of Operations ^{∗∗∗}

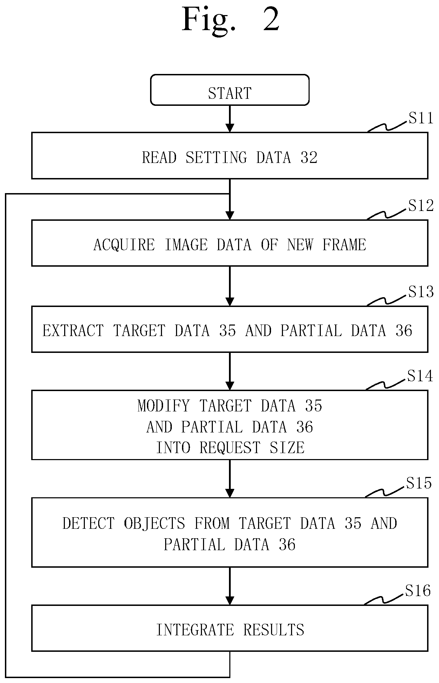

Operations of the object detection device 10 according to Embodiment 1 will be described with referring to Figs. 2 to 5.

An operation procedure of the object detection device 10 according to Embodiment 1 corresponds to an object detection method according to Embodiment 1. A program that implements the operations of the object detection device 10 according to Embodiment 1 corresponds to an object detection program according to Embodiment 1.

### (Step S11 of Fig. 2: Setting Reading Process)

The setting reading unit 21 reads the setting data 32 indicating a detection target region 33 and an enlarging region 34 from the storage 13.

The detection target region 33 is a region to detect a target object, out of a photographing region to be photographed by the photographing device 41.

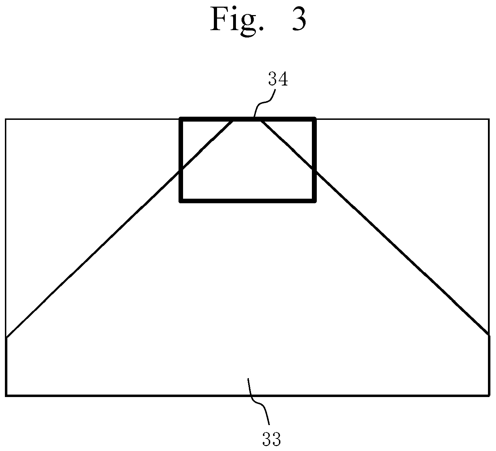

The enlarging region 34 is a region to detect an object that appears small, out of the detection target region 33. In Embodiment 1, the enlarging region 34 is a region located deep in the background of the image data, as illustrated in Fig. 3. That is, in Embodiment 1, the enlarging region 34 is a region within the detection target region 33, including a region located at a distance in a depth direction that is equal to or longer than a reference distance, out of a photographing region of the photographing device 41. It is possible that a region where a small object is to be treated as a target object is set as an enlarging region 34, even if this region is on a front side in the depth direction. Also, a plurality of enlarging regions 34 may be set in the detection target region 33.

In Embodiment 1, the setting data 32 indicating the detection target region 33 and the enlarging region 34 is set in advance by an administrator or the like of the object detection device 10, and is stored in the storage 13. However, in a process of step S11, the setting reading unit 21 may have the administrator or the like designate the detection target region 33 and the enlarging region 34. That is, for example, the setting reading unit 21 may have a function of displaying a photographing region, having the administrator or the like designate which region to be the detection target region 33 and which region to be the enlarging region 34, out of the photographing region, and generating the setting data 32 on the basis of this designation. The setting data 32 may be stored in the storage 13 in units of photographing devices 41, or in units of groups each formed by grouping the photographing devices 41. In this case, in step S11, the setting data 32 corresponding to the photographing device 41 that acquires the image data is read.

### (Step S12 of Fig. 2: Image Acquisition Process)

The image acquisition unit 22 acquires, via the communication interface 14, image data of a latest frame obtained by photographing a photographing region with the photographing device 41.

### (Step S13 of Fig. 2: Data Extraction Process)

The data extraction unit 23 extracts, out of the image data acquired in step S12, image data of a region including the detection target region 33 indicated by the setting data 32 which is read in step S11, as target data 35. In Embodiment 1, the data extraction unit 23 sets the image data acquired in step S12, as the target data 35 with no change being made. Also, the data extraction unit 23 extracts, out of the target data, image data of the enlarging region 34 indicated by the setting data 32 which is read in step S11, as partial data 36.

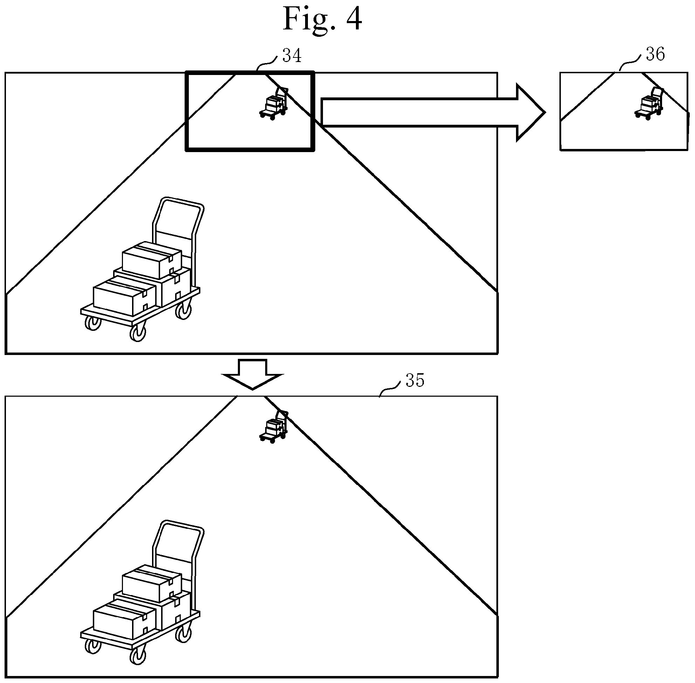

In a specific example, when the image data illustrated in Fig. 4 is acquired in step S12, the data extraction unit 23 sets the image data illustrated in Fig. 4 as the target data 35 with not change being made, and extracts, out of the image data illustrated in Fig. 4, image data of an enlarging region 34 portion, as the partial data 36.

### (Step S14 of Fig. 2: Size Modification Process)

The size modification unit 24 size-modifies each of the extracted target data 35 and the extracted partial data 36 to a request size requested by the object detection model 31. The object detection model 31 is a model that is generated by a scheme such as deep learning and that detects a target object from image data.

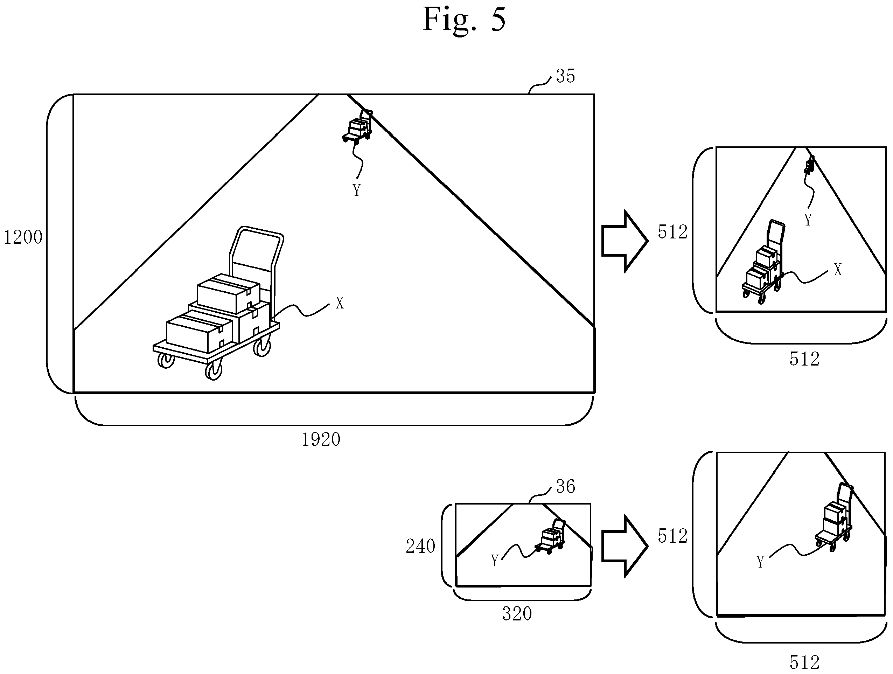

In a specific example, assume that the target data 35 is image data of 1920-pixel width × 1200-pixel length and that the partial data 36 is image data of 320-pixel width × 240-pixel length, as illustrated in Fig. 5. Also assume that the request size is 512-pixel width × 512-pixel length. In this case, the size modification unit 24 converts the target data 35 by reduction into image data of 512-pixel width × 512-pixel length. The size modification unit 24 also converts the partial data 36 by enlargement into mage data of 512-pixel width × 512-pixel length.

It is assumed that in principle the target data 35 is reduced. That is, it is assumed that the request size is smaller than the size of the target data 35. In contrast, the partial data 36 may be enlarged or reduced depending on the size of the enlarging region 34. However, as the partial data 36 is image data of part of the target data 35, the partial data 36, even if it should be reduced, will not be reduced by a magnification as much as that for the target data 35.

### (Step S15 of Fig. 2: Object Detection Process)

The object detection unit 25 inputs each of the target data 35 and the partial data 36 which are size-modified in step S14, to the object detection model 31, and detects a target object from each of the target data 35 and the partial data 36. Then, the object detection unit 25 takes a result detected from the target data 35 as first result data 37, and a result detected from the partial data 36 as second result data 38.

In a specific example, the object detection unit 25 inputs the target data 35 and the partial data 36, each of which has been converted into image data of 512-pixel width × 512-pixel length as illustrated in Fig. 5, to the object detection model 31. Then, an object X is detected from the target data 35. Also, an object Y is detected from the partial data 36. An object Y is included also in the target data 35. However, as the object Y in the target data 35 is very small, it is possible that the object Y is not detected from the target data 35.

### (Step S16 of Fig. 2: Integration Process)

The integration unit 26 generates integration result data that is integration of the first result data 37 and the second result data 38, the first result data 37 expressing a result extracted from the target data 35, the second result data 38 having been extracted from the partial data 36.

It is possible that the same object is included in the first result data 37 and in the second result data 38. In a specific example, when an object Y is detected also from the target data 35 illustrated in Fig. 5, this signifies that the same object Y is detected from the target data 35 and from the partial data 36. Therefore, the integration unit 26 integrates the first result data 37 and the second result data 38 such that the same objects form one object. That is, the integration unit 26 integrates the first result data 37 and the second result data 38 such that even if the same object Y is detected from the target data 35 and from the partial data 36, the integration result data includes only one object Y.

For example, the integration unit 26 integrates the first result data 37 and the second result data 38 with employing a scheme such as Non-Maximum Suppression (NMS).

### ^{∗∗∗} Effect of Embodiment 1 ^{∗∗∗}

As described above, the object detection device 10 according to Embodiment 1 size-modifies not only the target data 35 but also the partial data 36 to the request size, and then inputs the size-modified target data 35 and the size-modified partial data 36 to the object detection model 31, so as to detect the target object. As a result, even an object that appears small, just as the object appearing deep in the background of the image data, can be detected by the object detection model 31.

That is, the target data 35 of Fig. 5 includes the object X and the object Y. However, when being inputted to the object detection model 31, the target data 35 is size-modified to the request size and accordingly the object Y becomes very small. Therefore, the object Y that should be normally detected is not detected from the target data 35.

Aside from the target data 35, the partial data 36 is also size-modified to the request size and then inputted to the object detection model 31. The partial data 36 is image data of part of the target data 35. Therefore, the object Y included in the size-modified partial data 36 is larger than the object Y included in the size-modified target data 35. For this reason, the object Y can be readily detected from the partial data 36.

The object detection device 10 according to Embodiment 1 integrates the first result data 37 and the second result data 38 such that the same objects form one object. Hence, integration result data from which one object is detected can be obtained in both of: a case where one object is detected from either one of the target data 35 and the partial data 36; and a case where one object is detected from both of the target data 35 and the partial data 36.

### ^{∗∗∗} Other Configurations ^{∗∗∗}

### < Modification 1 >

Depending on a distance, an angle, or the like between the photographing device 41 and a region to detect an object, a case is possible where the enlarging region 34 is not limited to a region deep in the background of the image data but may be decided on a region near the center. Also, depending on a photographing region of the photographing device 41, a plurality of enlarging regions 34 may be set.

That is, as a region to detect an object that appears small, any number of enlarging regions 34 may be set within a range that is an arbitrary region on the image data. By setting individual conditions of those enlarging regions 34 to the setting data 32 per photographing device 41, the partial data 36 can be extracted per photographing device 41.

### < Modification 2 >

In Embodiment 1, the function constituent elements are implemented by software. In Modification 2, the function constituent elements may be implemented by hardware. A difference of Modification 2 from Embodiment 1 will be described.

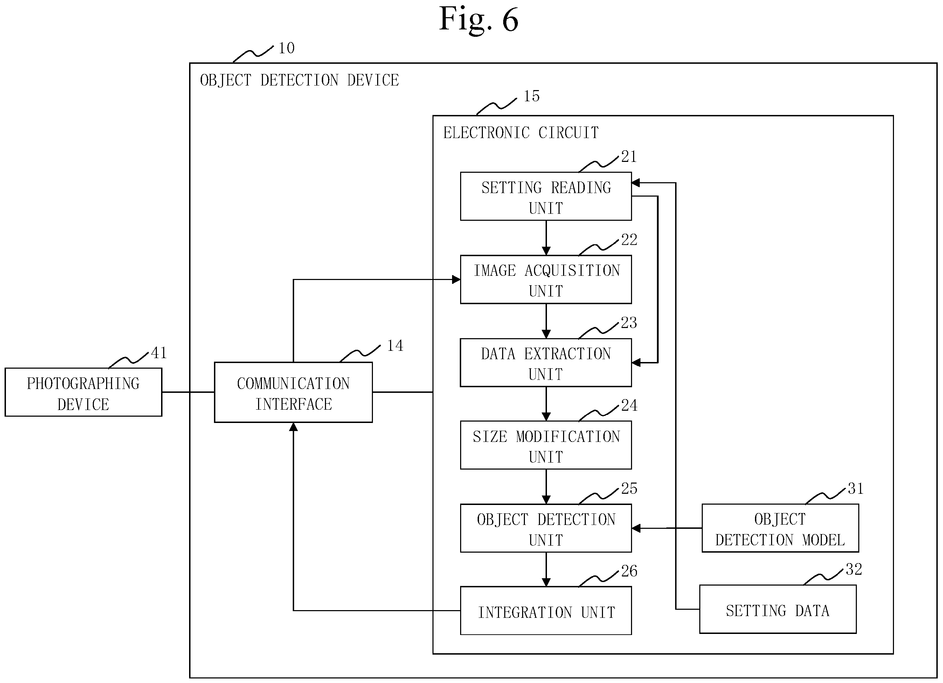

A configuration of an object detection device 10 according to Modification 2 will be described with referring to Fig. 6.

When the function constituent elements are implemented by hardware, the object detection device 10 is provided with an electronic circuit 15 in place of a processor 11, a memory 12, and a storage 13. The electronic circuit 15 is a dedicated circuit that implements functions of the function constituent elements and functions of the memory 12 and storage 13.

The electronic circuit 15 may be a single circuit, a composite circuit, a programmed processor, a parallel-programmed processor, a logic IC, a Gate Array (GA), an Application Specific Integrated Circuit (ASIC), or a Field-Programmable Gate Array (FPGA).

The function constituent elements may be implemented by one electronic circuit 15, or by a plurality of electronic circuits 15 through dispersion.

### < Modification 3 >

In Modification 3, some of the function constituent elements may be implemented by hardware, and the remaining function constituent elements may be implemented by software.

The processor 11, the memory 12, the storage 13, and the electronic circuit 15 are referred to as processing circuitry. That is, the functions of the function constituent elements are implemented by processing circuitry.

### Embodiment 2.

Only partial data 36 is inputted to an object detection model 31. In this respect, Embodiment 2 is different from Embodiment 1. In Embodiment 2, this difference will be described, and the same features will not be described.

### ^{∗∗∗} Description of Operations ^{∗∗∗}

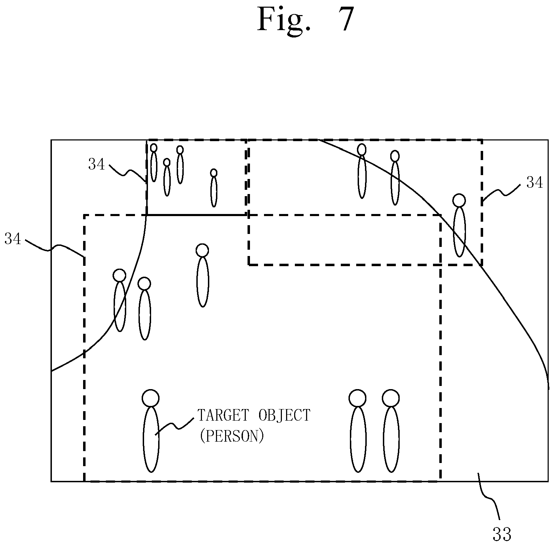

Operations of an object detection device 10 according to Embodiment 2 will be described with referring to Figs. 2 and 7.

An operation procedure of the object detection device 10 according to Embodiment 2 corresponds to an object detection method according to Embodiment 2. A program that implements the operations of the object detection device 10 according to Embodiment 2 corresponds to an object detection program according to Embodiment 2.

A process of step S12 is the same as that of Embodiment 1.

### (Step S11 of Fig. 2: Setting Reading Process)

A setting reading unit 21 reads setting data 32 indicating a detection target region 33 and an enlarging region 34 from a storage 13, just as in Embodiment 1.

In Embodiment 2, a plurality of enlarging regions 34 are set to roughly cover the detection target region 33, as illustrated in Fig. 7. A region of a size that matches a position in image data obtained with a photographing device 41 is set as each enlarging region 34. That is, for a position where a target object is smaller, a smaller enlarging region 34 is set. For example, for a region that is deeper in the background of the image data, a smaller-size enlarging region 34 is set; and for a region that is closer to the front side of the image data, a larger-size enlarging region 34 is set.

### (Step S13 of Fig. 2: Data Extraction Process)

A data extraction unit 23 extracts, out of the image data acquired in step 12, image data of each of the plurality of enlarging regions 34 indicated by the setting data 32 which is read in step S11, as partial data 36.

### (Step S 14 of Fig. 2: Size Modification Process)

A size modification unit 24 size-modifies each of the plurality of pieces of extracted partial data 36 to the request size requested by the object detection model 31.

### (Step S15 of Fig. 2: Object Detection Process)

An object detection unit 25 inputs each of the plurality of pieces of partial data 36 which are size-modified in step S14, to the object detection model 31, and detects a target object from each of the plurality of pieces of partial data 36. Then, the object detection unit 25 takes a result detected from each of the plurality of pieces of partial data 36, as second result data 38.

### (Step S16 of Fig. 2: Integration Process)

An integration unit 26 generates integration result data by integrating the individual pieces of second result data 38 which are extracted respectively from the plurality of pieces of partial data 36. It is possible that the same object is included in the plurality of pieces of second result data 38. Therefore, the integration unit 26 integrates the plurality of pieces of second result data 38 such that the same objects form one object.

### ^{∗∗∗} Effect of Embodiment 2 ^{∗∗∗}

As described above, the object detection device 10 according to Embodiment 2 sets the plurality of enlarging regions 34 having sizes that match positions in the image data, and takes as input the partial data 36 of the enlarging regions 34, to detect a target object. Accordingly, detection is performed from image data having sizes that match the positions in the image data, with using the object detection model 31. As a result, detection accuracy can be high.

The plurality of enlarging regions 34 described with referring to Fig. 7 are set to roughly cover the detection target region 33. However, the detection target region 33 is not necessarily covered with the enlarging regions 34. Depending on the photographing regions of the photographing devices 41, if a region or an object on which detection should focus exists on the detection target region 33, or inversely if a region that need not be detected exists on the detection target region 33, the setting data 32 may be set in units of photographing devices 41 such that the plurality of enlarging regions 34 are set on part of the detection target region 33.

### Embodiment 3.

An object detection model 31 is generated. In this respect, Embodiment 3 is different from Embodiments 1 and 2. In Embodiment 2, this difference will be described, and the same features will not be described.

In Embodiment 3, a case will be described where the object detection model 31 that conforms to Embodiment 1 is generated.

### ^{∗∗∗} Description of Configuration ^{∗∗∗}

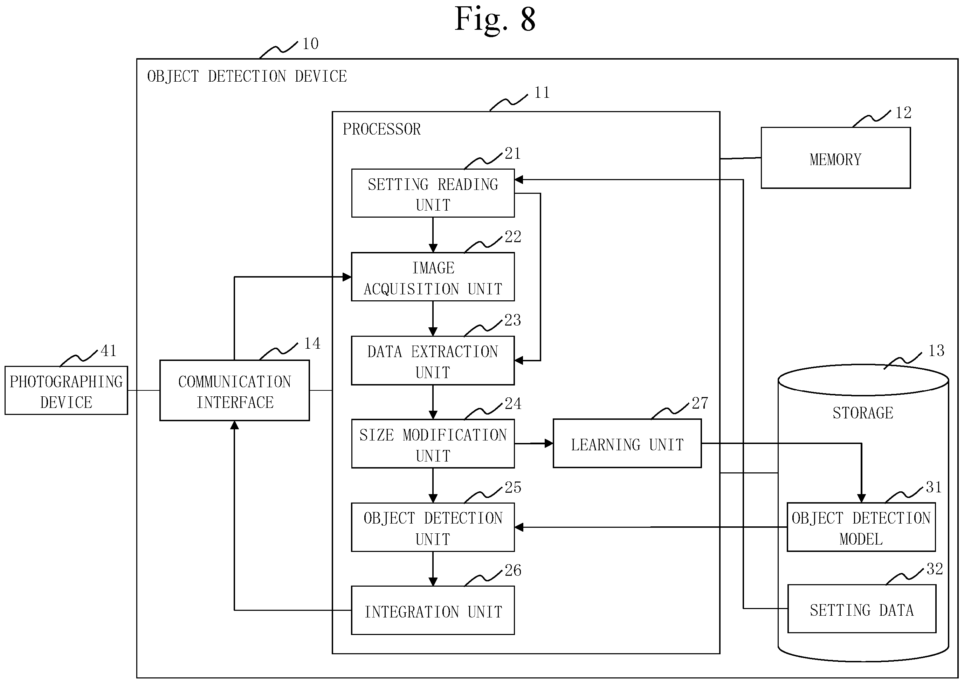

A configuration of an object detection device 10 according to Embodiment 3 will be described with referring to Fig. 8.

The object detection device 10 is provided with a learning unit 27 as a function constituent element, and in this respect is different from Embodiment 1. The learning unit 27 is implemented by software or hardware, just as any other function constituent element is.

### ^{∗∗∗} Description of Operations ^{∗∗∗}

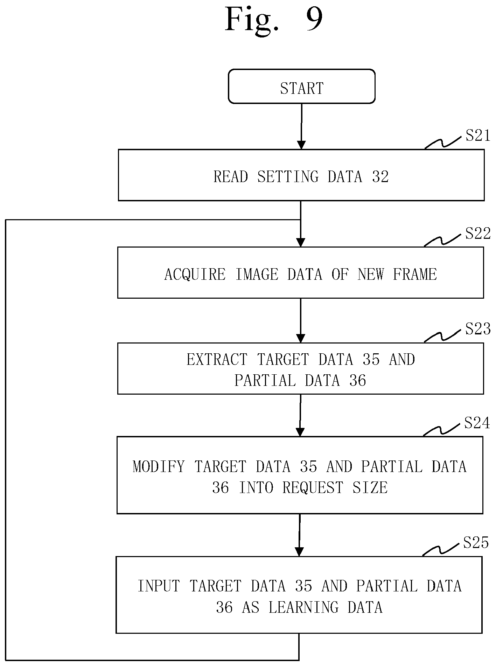

Operations of the object detection device 10 according to Embodiment 3 will be described with referring to Fig. 9.

An operation procedure of the object detection device 10 according to Embodiment 3 corresponds to an object detection method according to Embodiment 3. A program that implements the operations of the object detection device 10 according to Embodiment 3 corresponds to an object detection program according to Embodiment 3.

Processing of step S21 to step S24 is the same as processing of step S11 to step S14 of Fig. 2 in Embodiment 1.

### (Step S25 of Fig. 9: Learning Process)

Each of target data 35 and partial data 36 which are size-modified in step S23 is supplied to the learning unit 27 as learning data, so that the learning unit 27 generates the object detection model 31 through processing such as deep learning. Note that the target data 35 is image data of the same region as that of the target data 35 in the processing described with referring to Fig. 2, and that the partial data 36 is image data of the same region as that of the partial data 36 in the processing described with referring to Fig. 2.

For each of the target data 35 and the partial data 36, a target object included may be specified manually or so, and supervised learning data may be generated. The supervised learning data may be supplied to the learning unit 27, and the learning unit 27 may learn the supervised learning data.

### ^{∗∗∗} Effect of Embodiment 3 ^{∗∗∗}

As described above, not only the target data 35 but also the partial data 36 is supplied as the learning data to the object detection device 10 according to Embodiment 3, so that the object detection device 10 generates the object detection model 31. When the partial data 36 is compared with the target data 35, it is possible that as the size enlarges, the image of the partial data 36 becomes unclear partly or entirely. If image data including an unclear portion is not supplied as learning data, along with the enlargement, accuracy of detection from the image data including the unclear portion may decrease.

Therefore, when the object detection model 31 is generated by supplying only the target data 35 as the learning data, it is possible that accuracy of a process of detecting an object from the partial data 36 decreases. However, with the object detection device 10 according to Embodiment 3, since the partial data 36 is also supplied as the learning data, the accuracy of the process of detecting an object from the partial data 36 can be increased.

### ^{∗∗∗} Other Configurations ^{∗∗∗}

### < Modification 4 >

In Embodiment 3, a case of generating the object detection model 31 that conforms to Embodiment 1 has been described. It is also possible to generate an object detection model 31 that conforms to Embodiment 2.

In this case, the processing of step S21 to step S24 is the same as the processing of step S11 to step S14 of Fig. 2 in Embodiment 2. In step S25 of Fig. 9, each of a plurality of pieces of partial data 36 which are size-modified in step S23 is supplied to the learning unit 27 as the learning data, so that the learning unit 27 generates an object detection model 31 through processing such as deep learning. As a result, the same effect as that of Embodiment 3 can be achieved.

### < Modification 5 >

In Embodiment 3 and Modification 4, the object detection device 10 generates the object detection model 31. However, a learning device 50 that is different from the object detection device 10 may generate an object detection model 31.

As illustrated in Fig, 10, the learning device 50 is a computer. The learning device 50 is provided with hardware devices which are a processor 51, a memory 52, a storage 53, and a communication interface 54. The processor 51, the memory 52, the storage 53, and the communication interface 54 are the same as the processor 11, the memory 12, the storage 13, and the communication interface 14, respectively, of the object detection device 10.

The learning device 50 is provided with a setting reading unit 61, an image acquisition unit 62, a data extraction unit 63, a size modification unit 64, and a learning unit 65, as function constituent elements. Functions of the function constituent elements of the learning device 50 are implemented by software. The setting reading unit 61, the image acquisition unit 62, the data extraction unit 63, the size modification unit 64, and the learning unit 65 are the same as the setting reading unit 21, the image acquisition unit 22, the data extraction unit 23, the size modification unit 24, and the learning unit 27, respectively, of the object detection device 10.

The object detection device 10 in each embodiment may be applied to an Automated guided vehicle (AGV). An automated guided vehicle that employs an image recognition method as a guidance method reads marks and symbols illustrated on the floor or ceiling, and thereby obtains a position of its own. When the object detection device of the present disclosure is applied to the automated guided vehicle, even a mark appearing small can be detected. Hence, an automated guided vehicle that can move more accurately can be provided.

### Embodiment 4.

In Embodiment 4, an enlarging region specifying method will be described. In Embodiment 4, a difference from Embodiment 1 will be described, and the same feature will not be described.

### ^{∗∗∗} Description of Configuration ^{∗∗∗}

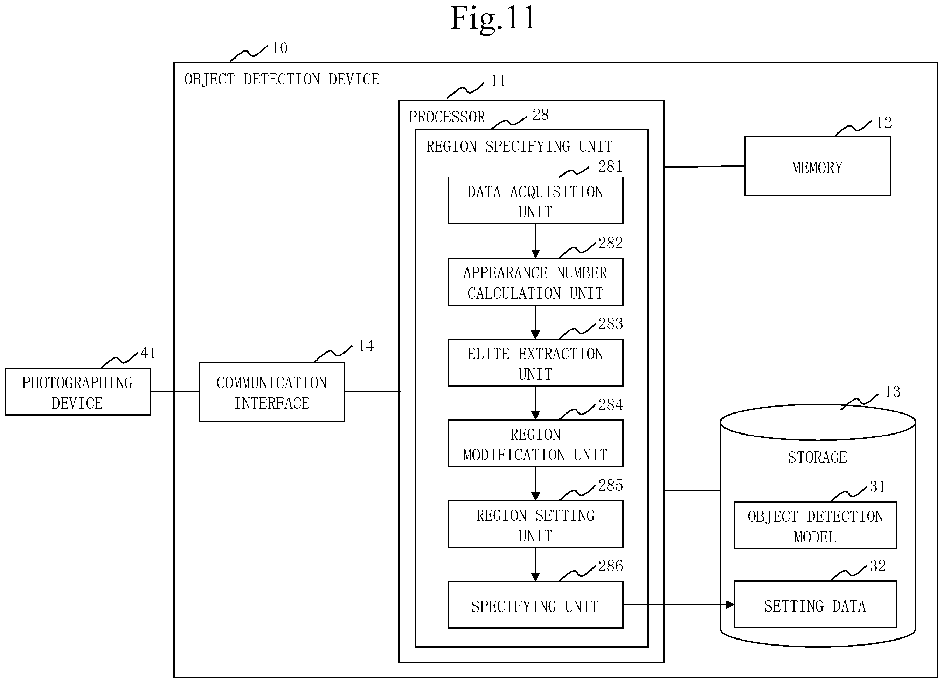

A configuration of an object detection device 10 according to Embodiment 4 will be described with referring to Fig. 11.

The object detection device 10 is provided with a region specifying unit 28 as a function constituent element, and in this respect is different from the object detection device 10 illustrated in Fig. 1. In Fig. 11, the function constituent elements illustrated in Fig. 1 are not illustrated. The region specifying unit 28 is provided with a data acquisition unit 281, an appearance number calculation unit 282, an elite extraction unit 283, a region modification unit 284, a region setting unit 285, and a specifying unit 286. The region specifying unit 28 is implemented by software or hardware just as other function constituent elements are.

### ^{∗∗∗} Description of Operations ^{∗∗∗}

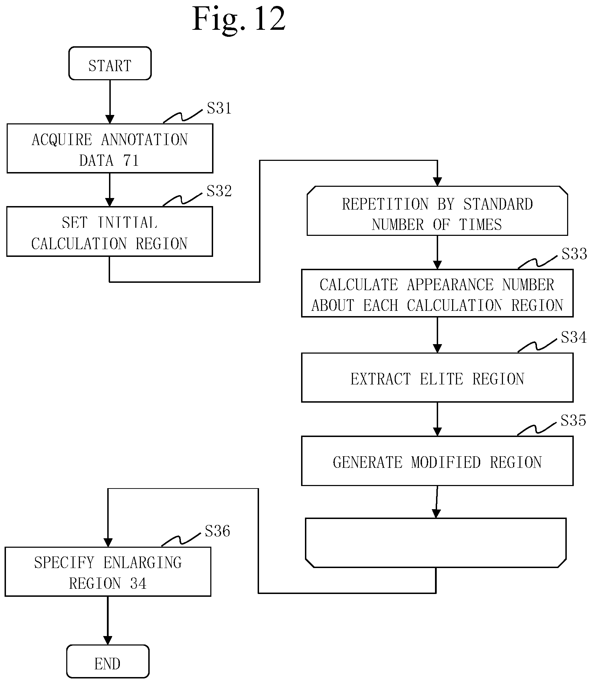

Operations of the object detection device 10 according to Embodiment 4 will be described with referring to Figs. 12 to 17.

An operation procedure of the object detection device 10 according to Embodiment 4 corresponds to an object detection method according to Embodiment 4. A program that implements the operations of the object detection device 10 according to Embodiment 4 corresponds to an object detection program according to Embodiment 4.

The region specifying unit 28 sets, as test data, a plurality of pieces of image data obtained by photographing a photographing region with a photographing device 41. The region specifying unit 28 specifies an enlarging region 34 in accordance with an appearance number about each region constituting the photographing region, the appearance number indicating how many objects smaller than a standard size appear in test data.

Specifically, the region specifying unit 28 specifies a region where the appearance number is larger than a threshold value, as an enlarging region, or specifies a region regarding which the appearance number in the other region is smaller than the threshold value, as an enlarging region. The region specifying unit 28 may specify each of a plurality of regions where the appearance number is larger than the threshold value, as an enlarging region 34, or may specify a region where the appearance number is the largest, as an enlarging region 34. The region specifying unit 28 may specify each of a plurality of regions regarding which the appearance numbers in other regions excluding the plurality of regions are smaller than the threshold value, as an enlarging region 34, or may specify one region regarding which the appearing number in the other region is the smallest, as the enlarging region 34.

In Embodiment 4, the enlarging region 34 is specified with using a genetic algorithm. In step S11 of Fig. 2, setting data 32 indicating the enlarging region 34 specified by the region specifying unit 28 is read.

A case will be described where one region where the appearance number is large is specified as the enlarging region 34.

### (Step S31 of Fig. 12: Data Acquisition Process)

The data acquisition unit 281 acquires annotation data 71 about each image data which is test data.

The annotation data 71 is data indicating type, position, and size of each object included in the image data. The type expresses classification, for example, a vehicle or a human, of the object. The position is given as a coordinate value of a location of the object in the image data. The size is, in Embodiment 4, a size of a rectangle enclosing the object.

### (Step S32 of Fig. 12: Initial Setting Process)

The region setting unit 285 sets each of a plurality of regions in the photographing region as an initial calculation region. The region setting unit 285 sets, for example, each calculation region randomly. In Embodiment 4, a length and a width of the calculation region are predetermined fixed sizes.

Processes of step S33 through step S35 are repeatedly executed by (standard number of times) - 1. The standard number of times will be expressed as N_GEN.

### (Step S33 of Fig. 12: Appearance Number Calculation Process)

The appearance number calculation unit 282 takes as input the annotation data 71 acquired in step S31, and calculates an appearance number indicating how many objects smaller the standard size appear, about each calculation region.

Specifically, the appearance number calculation unit 282 extracts data about a target type from the annotation data 71. The appearance number calculation unit 282 extracts data of an object smaller than the standard size from the extracted data about the target type. The standard size is a size that is set in advance. The standard size is, for example, a size detected by an object detection model 31 with lower detection accuracy than the standard value. The appearance number calculation unit 282 focuses on each calculation region as the target, and calculates a number of objects whose positions indicated by the annotation data 71 are included in the target calculation region, as the appearance number about the target calculation region.

In this description, the number of calculation regions is N_POP.

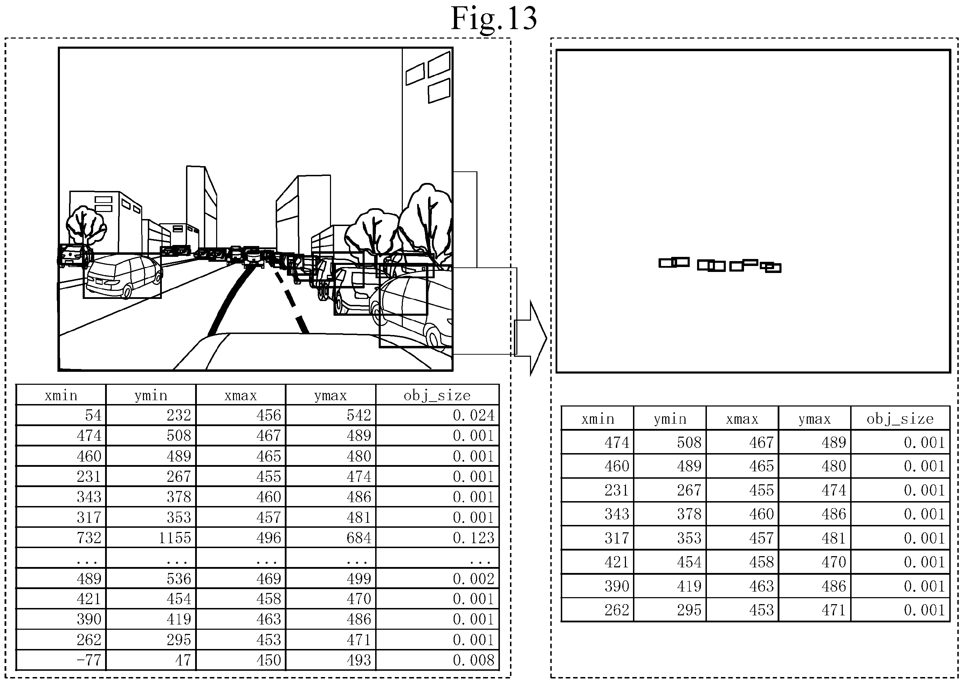

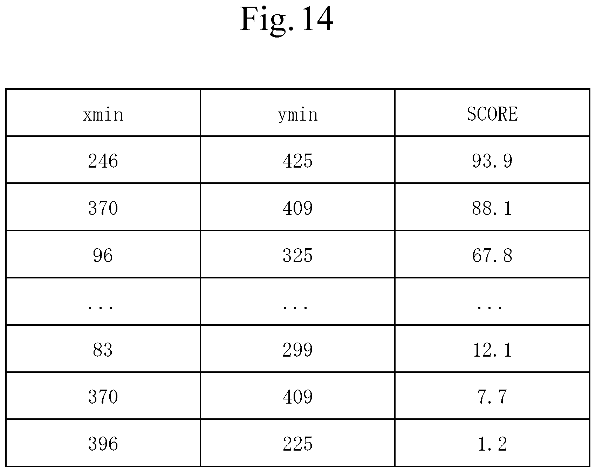

A specific example will be described with referring to Figs. 13 and 14.

In Fig. 13, the target type is a vehicle. In the annotation data 71 illustrated in the lower part of Fig. 13, regarding the position information, coordinate values of an upper left point of a rectangle enclosing an object are given as xmin and ymin, and coordinate values of a lower right point of a rectangle enclosing the object are given as xmax and ymax. In the annotation data 71 of Fig. 13, a value obtained by dividing, by a size of the image data, a size of the rectangle specified by xmin and ymin, and xmax and ymax, is given as an object size obj_size. If the standard size is 0.002, data of eight objects each with obj_size that is smaller than the standard size are extracted, as illustrated on the upper side of Fig. 13.

Then, as illustrated in Fig. 14, each calculation region is focused as a target, and a number of objects included in the target calculation region is calculated. In Fig. 14, a percentage of objects included in the target calculation region to all the extracted objects is calculated as a score. Note that in Fig. 14, each calculation region is expressed by xmin and ymin which are coordinate values of an upper left point. As described above, the shape and size of the calculation region are fixed. Hence, if the coordinate values of the upper left point are given, the calculation region can be specified.

The score is a specific example of the appearance number calculated by the appearance number calculation unit 282, which is explained in step S33. When the calculation region has a fixed shape and a fixed size, the following processing may be performed on the basis of the appearance number instead of the score.

### (Step S34 of Fig. 12: Elite Extraction Process)

The elite extraction unit 283 extracts some calculation regions where the appearance numbers calculated in step S34 are large, each as an elite region.

Specifically, the elite extraction unit 283 extracts extraction-number calculation regions as elite regions, in a descending order starting from a calculation region with a larger appearance number. The extraction number is set in advance. For example, the extraction number is set to correspond to 20% of a number of calculation regions.

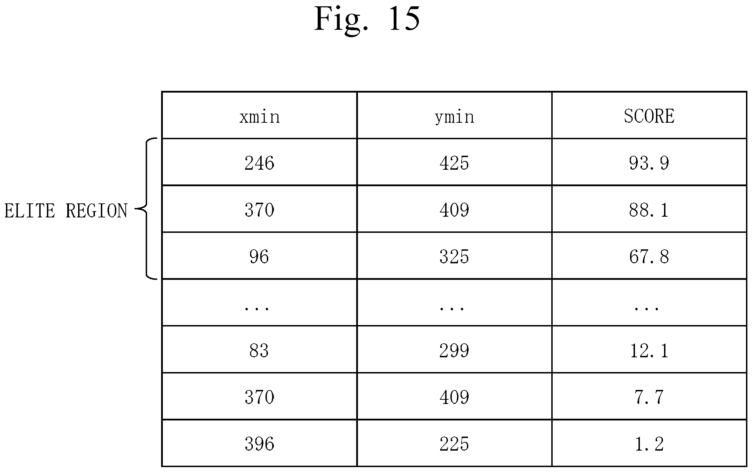

In Fig. 15, the score described above is calculated about each calculation region, in the same manner as in Fig. 14. Extraction-number calculation regions are extracted as elite regions, in a descending order starting from a higher-score calculation region. Hence, extraction-number calculation regions each having a larger appearance number are extracted as elite regions.

### (Step S35 of Fig. 12: Region Modifying Process)

The region modification unit 284 generates a modified region by modifying the elite region extracted in step S34 by either mutation or crossover. Here, the region modification unit 284 generates modified regions in a number obtained by subtracting the extraction number from N_POP.

Specifically, the region modification unit 284 adopts mutation on the basis of a mutation probability, and adopts crossover on the basis of (1 - mutation probability). The region modification unit 284 modifies the elite region by mutation or crossover whichever is adopted, thereby generating the modified region.

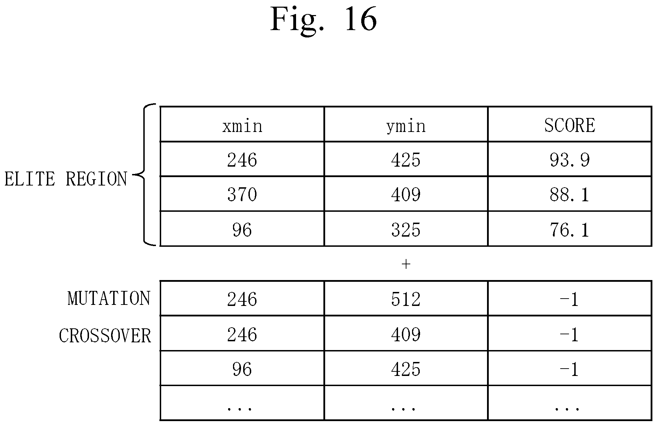

According to modification based on mutation, the region modification unit 284 randomly modifies xmin or ymin of a certain elite region, thereby generating a modified region . In Fig. 16, a modified region is generated by randomly modifying ymin of a 1st-row elite region. According to modification based on crossover, the region modification unit 284 adopts xmin of one elite region and ymin of the other elite region, between certain two elite regions, thereby generating a modified region. In Fig. 16, a modified region is generated by adopting ymin of a 2nd-row elite region and xmin of a 3rd-row elite region.

The region setting unit 285 sets each of the elite region extracted in step S34 and the generated modified region, as a new calculation region. As a result, N_POP pieces of calculation regions are newly set.

### (Step S36 of Fig. 12: Specifying Process)

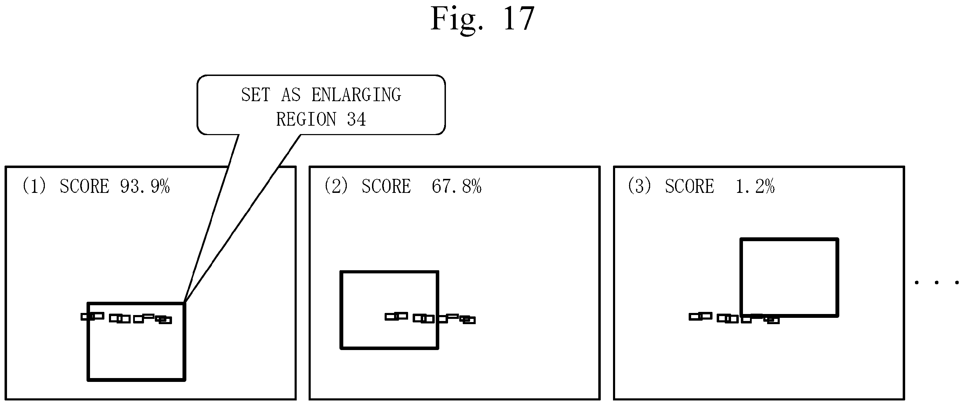

The appearance number calculation unit 282 calculates appearance numbers about calculation regions being set in step S35 in a standard-number time ((N_GEN)th time). Then, the specifying unit 286 specifies a calculation region where the calculated appearance number is larger than the threshold value, as the enlarging region 34. In this example, the specifying unit 286 sets, out of regions where appearance numbers are larger than the threshold value, a calculation region where appearance number is the largest, as the enlarging region 34. As a result, as illustrated in Fig. 17, a region including many small objects is set as the enlarging region 34.

The specifying unit 286 may set, out of the regions where the appearance numbers are larger than the threshold value, two or more calculation regions, as enlarging regions 34. Also, any integer equal to or larger than 0 can be set as the threshold value.

A case of specifying one region where the appearance number is large, as the enlarging region 34 has been described. With a following change, however, it is possible to specify a region regarding which the appearance number in the other region is small, as an enlarging region 34.

In step S33 and step S36, the appearance number calculation unit 282 focuses on each calculation region as a target, and calculates an appearance number of small objects located outside the target calculation region. In step S34, the elite extraction unit 283 extracts extraction-number calculation regions as elite regions, in an ascending order starting from a calculation region regarding which the appearance number outside the calculation region is smaller. In step S36, out of calculation regions regarding which the appearance numbers outside the calculation regions are small, a calculation region regarding which the appearance number outside the calculation region is the smallest is set as an enlarging region 34. In this case as well, the specifying unit 286 may set each of two or more calculation regions, as the enlarging region 34.

If a region where the appearance number is larger than the threshold value cannot be specified, it is possible to judge that the standard size is of a small numerical value, and the standard size can be changed to have a larger numerical value. That is, if a region where the appearance number is larger than the threshold value cannot be specified, it is judged that this is because a small standard size is set. Then, the standard size is raised so that the appearance number increases.

### ^{∗∗∗} Effect of Embodiment 4 ^{∗∗∗}

As described above, the object detection device 10 according to Embodiment 4 specifies the enlarging region 34 in accordance with an appearance number indicating how many objects smaller than the standard size appear in the test data. This enables setting the enlarging region 34 appropriately. As a result, even an object appearing small can be detected with using the object detection model 31.

As described above, the test data signifies a plurality of pieces of image data obtained by photographing the photographing region with the photographing device 41 in order to set the enlarging region 34. Alternatively, the test data may be learning data.

The object detection device 10 according to Embodiment 4 sets the enlarging region 34 with using a genetic algorithm. Optimization schemes include another scheme such as annealing, in addition to the genetic algorithm. Another optimization scheme can be employed in place of the genetic algorithm. However, with the genetic algorithm, a modified region is generated with employing mutation and crossover. Thus, different from with annealing, local stability is unlikely to occur, and a solution that is equal to or larger than a predetermined standard value can be obtained with a smaller calculation amount.

### ^{∗∗∗} Other Configurations ^{∗∗∗}

### < Modification 6 >

When a calculation region is enlarged, it will include many small objects easily. If the entire image data is a calculation region, it includes all small objects. Therefore, if the size of the calculation region is arbitrarily changeable, when the processing is repeated and optimization progresses, it is likely that the size of the calculation region increases. When the size of the enlarging region 34 increases, an objective of enabling detection of a small object cannot be achieved. For this reason, in Embodiment 4, the size of the calculation region is fixed.

However, the size of the calculation region may be changeable as far as it is equal to or less than an upper limit that is preset in advance. When an aspect ratio changes, it will adversely affect detection that uses the object detection model 31. Therefore, the aspect ratio may be fixed.

### < Modification 7 >

Embodiment 4 is aimed at specifying the enlarging region 34 of Embodiment 1. It is also possible to specify the enlarging region 34 of Embodiment 2.

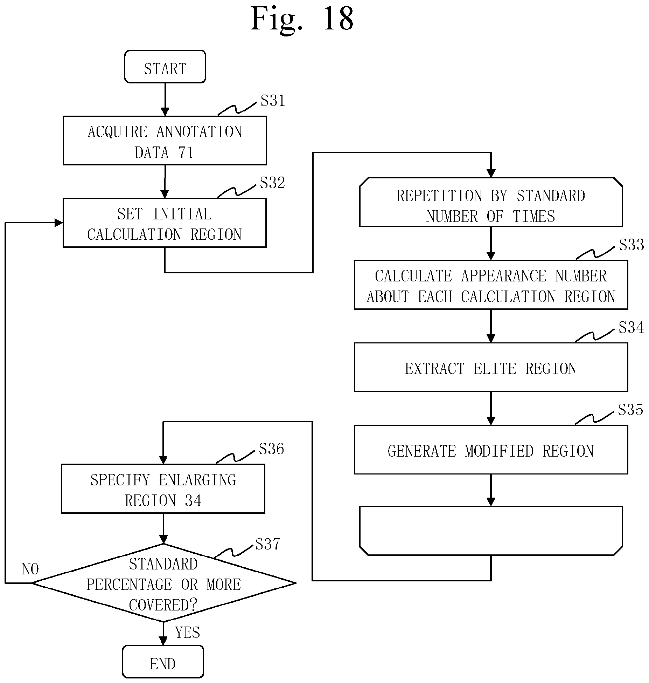

The enlarging region 34 of Embodiment 2 must be set to roughly cover the detection target region 33. Hence, the object detection device 10 performs processing illustrated in Fig. 18.

Processes of step S31 through step S36 are the same as those of Embodiment 4.

### (Step S37 of Fig. 18: Repetitive Judging Process)

The specifying unit 286 judges whether or not a standard percentage or more of the detection target region 33 is covered by the enlarging region 34 specified in the past.

If the standard percentage or more is covered, the specifying unit 286 ends the processing. On the other hand, if the standard percentage or more is not covered, the specifying unit 286 raises the standard size and puts the processing back to step S32.

By raising the standard size, a different region will be selected as an enlarging region 34. As a result, a plurality of enlarging regions 34 can be set to roughly cover the detection target region 33.

### Embodiment 5.

Embodiment 5 will describe a method of setting annotation data 71 in a handy manner. In Embodiment 5, a difference from Embodiment 4 will be described, and the same features as in Embodiment 4 will not be described.

### ^{∗∗∗} Description of Configuration ^{∗∗∗}

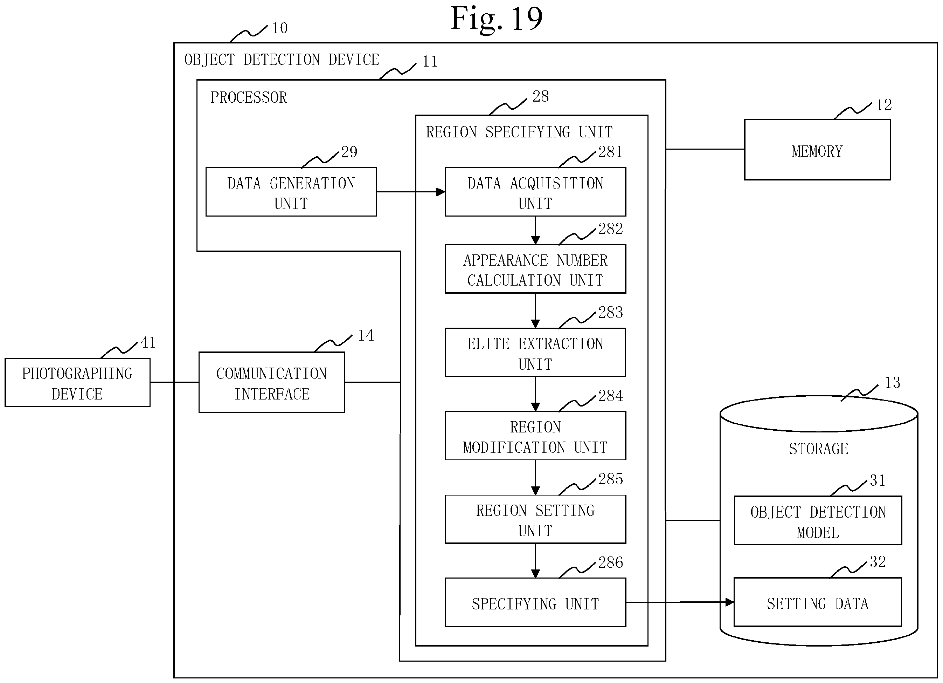

A configuration of an object detection device 10 according to Embodiment 5 will be described with referring to Fig. 19.

The object detection device 10 is provided with a data generation unit 29 as a function constituent element, and in this respect is different from the object detection device 10 illustrated in Fig. 11. The data generation unit 29 is implemented by software or hardware just as other function constituent elements are.

### ^{∗∗∗} Description of Operations ^{∗∗∗}

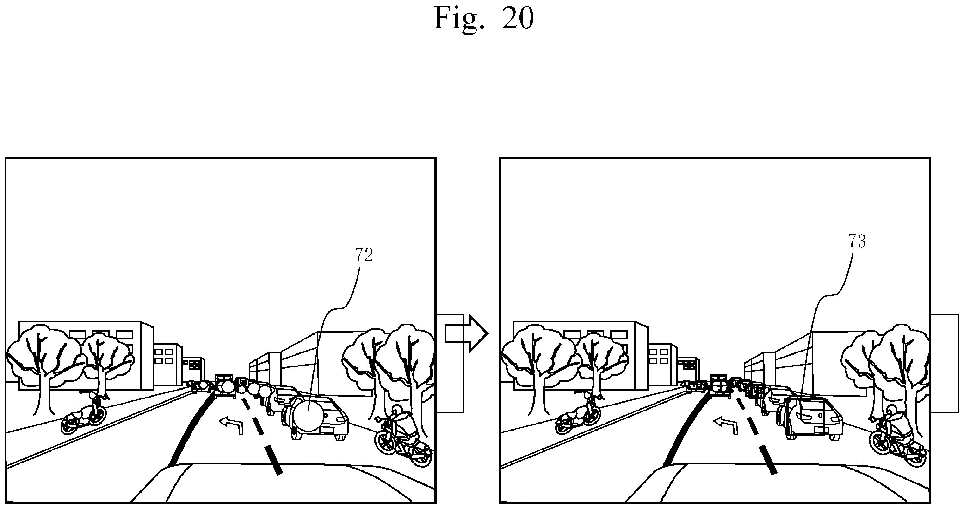

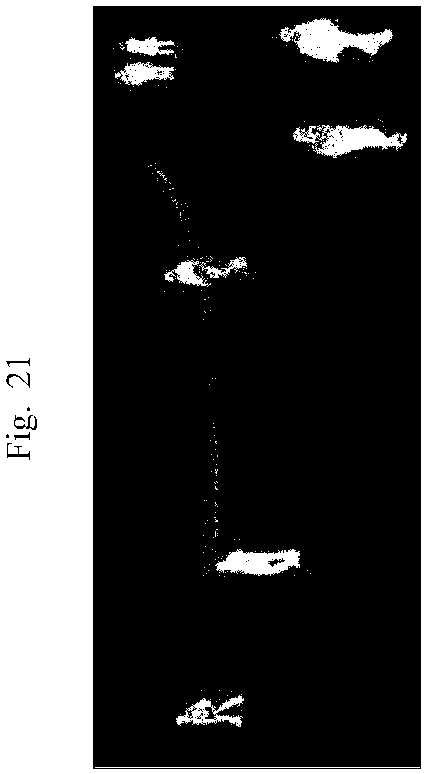

Operations of the object detection device 10 according to Embodiment 5 will be described with referring to Figs. 20 and 21.

An operation procedure of the object detection device 10 according to Embodiment 5 corresponds to an object detection method according to Embodiment 5. A program that implements the operations of the object detection device 10 according to Embodiment 5 corresponds to an object detection program according to Embodiment 5.

Two methods that are a method based on a distance and a method based on a background difference will be described.

### < Method Based on Distance >

A data generation unit 29 sets an object included in test data detected by a sensor, as a target object. For example, assume that when image data which is test data is acquired, an object existing in a photographing region is detected by LiDAR (Light Detection and Ranging) or the like. A distance from a photographing device 41 to the target object is identified from time taken until a laser beam emitted by LiDAR reaches the object. An inverse number of the distance from the photographing device 41 to the target object is correlated with a size of the target object.

In view of this, as illustrated in Fig. 20, the data generation unit 29 sets a figure with a size corresponding to the distance from the photographing device 41 to the target object, at a position of the target object. In Fig. 20, a circle 72 is set as the figure. Then, the data generation unit 29 sets a rectangle enclosing the preset figure, as a bounding box 73 about the target object. The data generation unit 29 takes the size of the bounding box 73 for the size of the target object, so that the data generation unit 29 can generate annotation data 71 about the target object.

Image data and information of LiDAR must be calibrated in advance. That is, a position in the image data and a laser beam emitting direction of LiDAR must be associated with each other. Also, photographing time of the image data and the laser beam emitting time of LiDAR must be associated with each other.

### < Method Based on Background Difference >

As illustrated in Fig. 21, the data generation unit 29 sets, as a bounding box 73, a rectangle enclosing a portion in which there is a difference between background data and each of a plurality of pieces of image data which are test data, the background data being obtained by photographing a photographing region while no detection target object exists in the photographing region. Specifically, the data generation unit 29 focuses on a portion where continuous differences exist, as one object, and encloses this object with one bounding box 73. The data generation unit 29 takes a size of the bounding box 73 for the size of the target object, so that the data generation unit 29 can generate the annotation data 71 about the target object.

In the two methods described above, the position and size of the object are identified. However, the annotation data 71 requires an object type. The object type may be identified by, for example, dividing the image data into small pieces of image data, taking each small image data as input, and identifying each small image data with using the object detection model.

### ^{∗∗∗} Effect of Embodiment 5 ^{∗∗∗}

As described above, the object detection device 10 according to Embodiment 5 generates the annotation data 71 in a handy manner. The setting method of the enlarging region 34 described in Embodiment 4 requires the annotation data 71 of the test data, as a premise. It is cumbersome to generate the annotation data 71 manually. In view of this, the object detection device 10 according to Embodiment 5 can generate the annotation data 71 in a handy manner, although it may include some errors.

The embodiments and modifications of the present disclosure have been described above. Of these embodiments and modifications, several ones may be practiced by combination. One or several ones of the embodiments and modifications may be practiced partly. The present disclosure is not limited to the above embodiments and modifications, but various changes can be made in the present disclosure as necessary.

### Reference Signs List

10: object detection device; 11: processor; 12: memory; 13: storage; 14: communication interface; 15: electronic circuit; 21: setting reading unit; 22: image acquisition unit; 23: data extraction unit; 24: size modification unit; 25: object detection unit; 26: integration unit; 27: learning unit; 28: region specifying unit; 281: data acquisition unit; 282: appearance number calculation unit; 283: elite extraction unit; 284: region modification unit; 285: region setting unit; 286: specifying unit; 29: data generation unit; 31: object detection model; 32: setting data; 33: detection target region; 34: enlarging region; 35: target data; 36: partial data; 37: first result data; 38: second result data; 41: photographing device; 50: learning device; 51: processor; 52: memory; 53: storage; 54: communication interface; 61: setting reading unit; 62: image acquisition unit; 63: data extraction unit; 64: size modification unit; 65: learning unit; 71: annotation data; 72: circle; 73: bounding box.

## Claims

1. An object detection device comprising:
a region specifying unit to take, as test data, a plurality of pieces of image data obtained by photographing a photographing region with a photographing device, and to specify an enlarging region in accordance with an appearance number about each region constituting the photographing region, the appearance number indicating how many objects smaller than a standard size appear in the test data;
a data extraction unit to extract, out of the image data obtained by photographing the photographing region, image data of the enlarging region specified by the region specifying unit, as partial data;
a size modification unit to size-modify the partial data extracted by the data extraction unit to a request size requested by an object detection model being a model that detects an object from image data; and
an object detection unit to input the partial data size-modified by the size modification unit to the object detection model, and to detect a target object from the partial data.

2. The object detection device according to claim 1,
wherein the region specifying unit specifies a region where the appearance number is larger than a threshold value, as the enlarging region, or specifies a region regarding which the appearance number in the other region is smaller than the threshold value, as the enlarging region.

3. The object detection device according to claim 1 or 2,
wherein the region specifying unit specifies a region where the appearance number is the largest, as the enlarging region, or specifies a region regarding which the appearance number in the other region is the smallest, as the enlarging region.

4. The object detection device according to any one of claims 1 to 3,
wherein the region specifying unit comprises:
an appearance number calculation unit to take each of a plurality of regions in the photographing region as a calculation region, and to calculate an appearance number about each calculation region, the appearance number indicating how many objects smaller the standard size appear;
an elite extraction unit to extract some calculation regions where the appearance numbers calculated by the appearance number calculation unit are large, each as an elite region;
a region modification unit to generate a modified region modified from the elite region extracted by the elite extraction unit, by either mutation or crossover;
a region setting unit to set each of the elite region and the modified region generated by the region modification unit, as a new calculation region; and
a specifying unit to specify, about calculation regions being set by the region setting unit in a standard-number time, a calculation region where the calculated appearance number is larger than the threshold value, as the enlarging region.

5. The object detection device according to any one of claims 1 to 4, further comprising
a data generation unit to take an object included in test data detected by a sensor, as a target object, and to set a figure with a size corresponding to a distance from the photographing device to the target object, at a position of the target object, thereby generating annotation data expressing a position and a size of the object included in the test data,
wherein the region specifying unit calculates the appearance number indicating how many objects smaller than the standard size appear, on a basis of the annotation data generated by the data generation unit.

6. The object detection device according to any one of claims 1 to 4, further comprising
a data generation unit to set a figure enclosing a portion in which there is a difference between background data and each of a plurality of pieces of image data which are test data, the background data being obtained by photographing the photographing region while no detection target object exists in the photographing region, thereby generating annotation data expressing a position and a size of the object included in the test data,
wherein the region specifying unit calculates the appearance number indicating how many objects smaller than the standard size appear, on a basis of the annotation data generated by the data generation unit.

7. The object detection device according to any one of claims 1 to 6,
wherein the data extraction unit extracts image data of a region including a detection target region, as target data from image data obtained by photographing the photographing region,
wherein the size modification unit size-modifies each of the target data and the partial data to a request size, and
wherein the object detection unit inputs each of the target data and the partial data which are size-modified, to the object detection model, and detects a target object from each of the target data and the partial data.

8. The object detection device according to any one of claims 1 to 6,
wherein the region specifying unit specifies each of a plurality of regions where the appearance number is smaller than a threshold value, as an enlarging region,
wherein the data extraction unit extracts image data of each enlarging region as partial data,
wherein the size modification unit size-modifies partial data about said each enlarging region, from image data to the request size, and
wherein the object detection unit inputs the size-modified partial data about said each enlarging region to the object detection model, and detects a target object from the partial data about said each size-modified enlarging region.

9. The object detection device according to claim 8,
wherein the region specifying unit specifies a plurality of enlarging regions by specifying a region where the appearance number is the largest, as an enlarging region, while gradually raising the standard size, the appearance number indicating how many objects smaller than the standard size appear.

10. An object detection method comprising:
by a region specifying unit, taking, as test data, a plurality of pieces of image data obtained by photographing a photographing region with a photographing device, and specifying an enlarging region in accordance with an appearance number about each region constituting the photographing region, the appearance number indicating how many objects smaller than a standard size appear in the test data;
by a data extraction unit, extracting, out of the image data obtained by photographing the photographing region, image data of the enlarging region, as partial data;
by a size modification unit, size-modifying the partial data to a request size requested by an object detection model being a model that detects an object from image data; and
by an object detection unit, inputting the size-modified partial data to the object detection model, and detecting a target object from the partial data.

11. An object detection program which causes a computer to function as an object detection device that performs:
a region specifying process of taking, as test data, a plurality of pieces of image data obtained by photographing a photographing region with a photographing device, and specifying an enlarging region in accordance with an appearance number about each region constituting the photographing region, the appearance number indicating how many objects smaller than a standard size appear in the test data;
a data extraction process of extracting, out of the image data obtained by photographing the photographing region, image data of the enlarging region specified by the region specifying process, as partial data;
a size modification process of size-modifying the partial data extracted by the data extraction process to a request size requested by an object detection model being a model that detects an object from image data; and
an object detection process of inputting the partial data size-modified by the size modification process to the object detection model, and detecting a target object from the partial data.
